# EUROPEAN PATENT SPECIFICATION

(11) **EP 2 094 184 B1**
(45) Date of publication and mention of the grant of the patent: **04.07.2012**
(21) Application number: 07849354.1
(22) Date of filing: 06.12.2007
(51) Int. Cl.: A61M 1/36

(54) **YANKAUER SUCTION DEVICE**
YANKAUER-SAUGVORRICHTUNG
DISPOSITIF D'ASPIRATION YANKAUER

(30) Priority: 15.12.2006 US 640114; 14.09.2007 US 901119
(43) Date of publication of application: 02.09.2009
(73) Proprietor: KIMBERLY-CLARK WORLDWIDE, INC., Neenah, WI 54956 (US)
(72) Inventor: HERSHEY, Adrienne A., Cumming, Georgia 30041 (US); ARAMBULA, Gerry, Salt Lake City, Utah 84105 (US); FISHER, James V., Lindon, Utah 84042 (US); JONES, Bobby D., Tooele, Utah 84074 (US); MADSEN, Edward B., Cumming, Georgia 30041 (US); TEIXEIRA, Scott M., Cumming, Georgia 30040 (US)
(74) Representative: Mabey, Katherine Frances
(86) International application number: PCT/IB2007/054946
(87) International publication number: WO 2008/075241

(56) References cited:
- WO-A1-96/30069
- US-A- 4 810 194
- US-A- 6 129 547
- US-B1- 6 500 142
- US-B1- 6 588 427

## Description

### FIELD OF THE INVENTION

The present invention relates to a medical suctioning device of the type known in the art as a "Yankauer." These devices are typically used to provide suctioning while performing oral care or other procedures on critical care patients.

### BACKGROUND

Various medical procedures require suctioning of a patient's mouth. These procedures include situations when oral care procedures are performed on an intubated patient. Yankauer suction devices for this purpose are generally known and include an elongated suction tube connectable at one end to a suction source. The other end includes a suction tip with one or more suction holes that is placed in the patient's mouth. The conventional devices suction well and are relatively rigid to allow the clinician to reach remote areas of the mouth that require suctioning.

A concern with the conventional devices is cleanliness and the risk of contamination. The suction devices are typically used for a twenty-four hour period and then disposed of. Between uses, however, the devices must be cleaned and stored in an environment that minimizes the risk of harboring and incubating bacteria from the mouth. This is a burdensome task and, unfortunately, not always followed. The devices typically end up on the floor, are placed on a ledge or other non-sterile surface, or shoved under the patient's pillow wherein they may become contaminated and need disposal. This situation can add substantial cost and inconvenience to the healthcare of the patient.

Attempts have been made to alleviate certain of the problems associated with the Yankauer devices. For example, sheathed devices are know wherein the suction tube is covered by a sleeve or "sheath" between uses. The sheath, however, does not clean the suction tube and may actually foster an environment for rapid growth of bacteria on the surface of the tube. U.S. Pat. No. 6,500,142 describes a suctioning device incorporating a retractable, protective sheath. After use of the device, the clinician slides the sheath forward over the suction tube. The device includes an automatic closure or cap attached to the distal end of the sheath that engages the suction tip and automatically moves to a position to close the cap over the suction tip, essentially isolating the suction tube within the capped sheath. However, unless the suction tube and tip are thoroughly cleaned before deploying the sheath and cap, any bacteria from the patient's mount on the tube and tip will remain and possibly grown, which can lead to recolonization of bacteria and re-infection of the patient with subsequent use of the device.

An additional concern with conventional Yankauer suction devices is that many of them are not ergonomically sized and shaped. For example, some conventional Yankauer suction devices require a button that must be constantly held down to activate the suction pressure, are too small to comfortably hold for extended periods of time, or do not contain a mechanism for convenient storage between uses without risk of contamination.

The present invention relates to an improved Yankauer suctioning device that addresses certain of the drawbacks of conventional devices, particularly the sheathed devices.

### SUMMARY

The present invention provides a Yankauer suction device in accordance with claim 1.

The present invention provides for a suction device that may be used in any manner of suctioning procedure. The device is particularly suited as a Yankauer suction device for aspirating a patient's mouth, particularly an intubated patient. The device includes an elongated suction tube having a distal and proximal end with a suction tip at the distal end thereof. The proximal end of the suction tube is configured to connect to a handle member. A collar is disposed around the suction tube and is slidable along the suction tube from a retracted position to a deployed position. A flexible protective sleeve is provided with a proximal end fixed in position relative to the proximal end of the suction tube. The distal end of the sleeve is configured with the collar so as to move therewith and cover the suction tube in the deployed position of the collar. A wiper seal is contained within the collar in sliding frictional engagement around the suction tube.

The wiper seal may be formed from any suitable elastomeric material that engages and scrapes along the suction tube as the collar is moved to its deployed position. This material could include, but is not limited to, an elastomeric material. In this manner, any mucous or particulate matter that accumulates on the exterior of the suction tube from use of the device is effectively scraped from the tube by the wiper seal and moved to the suctioning tip where it can be suctioned through the tip and rinsed. This cleaning action provides a significant benefit.

A handle member having a distal and proximal end and topside and underside portions is connectable to the suction tube at the proximal end of the suction tube. The handle member includes an adapter at its proximal end and the adapter is configures for connecting the suction tube to a suction source. Alternatively, the suction tube may be directly attached to a suction source. The handle member also includes a storage tube clip located on the underside of the handle member.

Desirably, the yankauer suction device includes an external fitting defining the proximal end of the suction tube, the suction tube cover having a diameter greater than the proximal portion of the suction tube, the suction tube cover further being adapted to receive the handle member. Additionally, it is desirable that the distal end of the handle member has a diameter greater than the proximal end of the suction tube and a diameter smaller than the diameter of the external fitting, wherein the distal end of the handle member is adapted to nest within the handle member.

Desirably, the storage tube clip of the handle member is located on the distal end of the handle member and the handle member includes at least one valve. The handle member may include a slider valve and may include a switch which is adapted to open and close the slider valve.

Desirably, in the retracted position of the collar, the sleeve may be stored within a storage recess defined in the collar so that the sleeve does not interfere with use of the device, and stays clean during such use. Frictional engagement between the wiper seal and the suction tube ensures that the sleeve does not slide freely and stays retracted without necessity of a separate latch or other mechanism to secure the sleeve and collar in the retracted position.

The collar may include an elongated open-ended annular ring portion at the distal end thereof. The suction tip resides within this ring portion in the deployed positions of the collar. The ring portion and wiper seal generally define a cleaning chamber within which the suction tip is contained in the deployed position of the collar. To remove any remaining matter from the suction tip after the collar has been slid to the deployed position, the collar may be immersed in a container (e.g., a cup) of cleaning solution. Because the collar is open-ended, the solution is able to circulate within the cleaning chamber and around the suction tip. During this cleaning, suction may be drawn through the suction tip to create a more turbulent cleaning of the tip. Additional suction holes may be provided at a proximal location on the suction tip to further aid in removing any secretions or other matter from the tip or within the cleaning chamber during the cleaning process. The open-ended configuration of the cleaning chamber also promotes good ventilation through and around the suction tip to dry the tip after use or cleaning without the tip coming into contact with external surfaces. This ability to thoroughly clean and dry the suction tip after deploying the sleeve adds additional significant benefits.

In an embodiment of the invention, the suction tip is an extension of the suction tube with the same diameter as the tube. The deployed position of the collar and sleeve is defined by the length of the sleeve so that the suction tip is not pulled through the wiper seal.

The wiper seal of the yankauer suction device may include a silicone lubricant and/or antimicrobial coating on its surface.

Additionally, during use of the yankauer suction device, the index finger and thumb are located in substantially overlaying positions on the distal end of the handle member and remaining fingers are located in a position proximal to the position of the storage tube clip. The thumb is adapted to proximally displace the slide switch without displacement of the other fingers.

The invention provides a yankauer suction device that includes an elongated suction tube having a distal and proximal end, a suction tip being located at the distal end and the proximal end being connectable to a handle member. The device includes a collar slidable along the suction tube from a retracted position to a deployed position, a sleeve having a proximal end fixed relative to the proximal end of the suction tube, and a distal end configured with the collar so as to move with the collar and cover the suction tube in the deployed position of said collar. The device further includes a wiper seal contained within the collar in sliding frictional engagement around the suction tube and a handle member having a distal and proximal end and topside and underside portions. The handle member is connectable to the suction tube at the proximal end of the suction tube and includes an adapter at its proximal end. The adapter is configured for connecting the suction tube to a suction source and the handle member further includes a storage tube clip located on the underside of the handle member. Additionally, the yankauer suction device includes an open-ended cleaning chamber defined at the distal end of the collar, the suction tip residing within the cleaning chamber in the deployed position of the collar. The cleaning chamber may be delimited by the wiper seal.

### BRIEF DESCRIPTION OF THE FIGURES

Figures 1A through 1C are perspective sequential operational views of an embodiment of a suction device according to the invention.
Figure 1D is a cross-sectional view of the collar, sleeve, and suction tube.
Figure 2A is a perspective view of a suction tube which is not in accordance with the invention.
Figure 2B is a perspective view of an embodiment of a suction tip that may be used with devices according to the invention.
Figure 3A and 3B are cross-sectional views of portions of the handle member of the suction device according to the invention.
Figure 4 is a cross-sectional view of the distal end of a suction device not according to the invention but which has been retained to facilitate understanding of certain features of the invention.
Figure 5 is a cross-sectional view of the distal end of an embodiment of a suction device according to the invention which includes a cleaning chamber.
Figure 6 is a perspective view of a cleaning operation for a suction device not according to the invention but which has been retained to facilitate understanding of certain features of the invention.
Figure 7 is a view of ergonomic handling of the handle member according to the invention.

### DETAILED DESCRIPTION

The Yankauer suction device of the present invention provides for an ergonomically sized and shaped suction device that may be easily switched on and off, fits within the natural contours of the hand, and is easily stored between uses. The suction device incorporates a protective sleeve for minimizing the transmission of pathogens onto the suction tube and incorporates a mechanism for cleaning the suction tube.

The invention will be described with reference to the following description and figures which illustrate certain embodiments. It will be apparent to those skilled in the art that these embodiments do not represent the full scope of the invention which is broadly applicable in the form of variations and equivalents as may be embraced by the claims appended hereto. Furthermore, features described or illustrated as part of one embodiment may be used with another embodiment to yield still a further embodiment. It is intended that the scope of the claims extend to all such variations and embodiments.

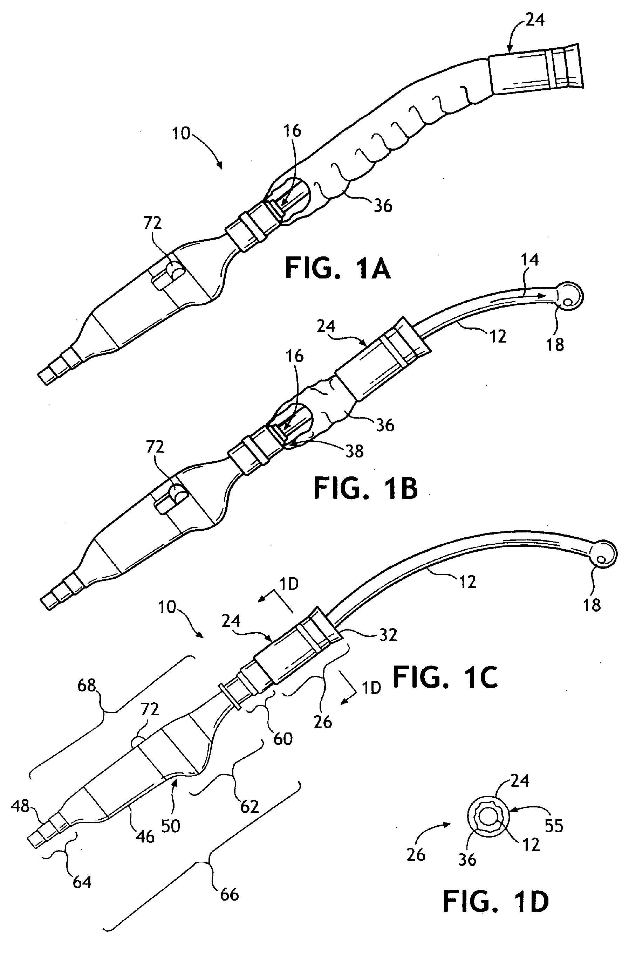

Figs. 1A through 1C illustrate an embodiment of a suction device 10 in accordance with the invention. The device 10 is particularly suited as a surgical Yankauer device for aspirating a patient's mouth, particularly an intubated patient. The device 10 includes an elongated suction tube 12 having a distal end 14 and a proximal end 16. As used herein, "distal" refers to the direction closest to the patient and "proximal" refers to the direction closest to the clinician. The suction tube 12 includes a suction tip 18 at the distal end 14 thereof. Desirably, the suction tube will curve towards the distal end, however, the distal end may also be straight. Curvature of the distal end allows the suction tube easier access to the cavity in which the suction tube is being inserted.

The proximal end 16 of the suction tube 12 is configured with any conventional suction source typically provided in a medical facility for the type of Yankauer suctioning typically performed on intubated patients. The suction tube 12 may be configured directly with the suction source, or may be in communication with the suction source through any manner or configuration of intermediate members, for example, a handle member 46. Such intermediate members may include any desired functionalities, such as the ability to regulate the suction flow through the device.

The device 10 includes a collar 24 having a body 26 that may be configured with a central recess portion for placement of the clinician's fingers when operating the device 10, as explained below. The collar 24 is disposed around the suction tube 12 and is slidable along the suction tube 12 from a retracted position illustrated in Fig. 1C to a deployed position illustrated in Fig. 1A.

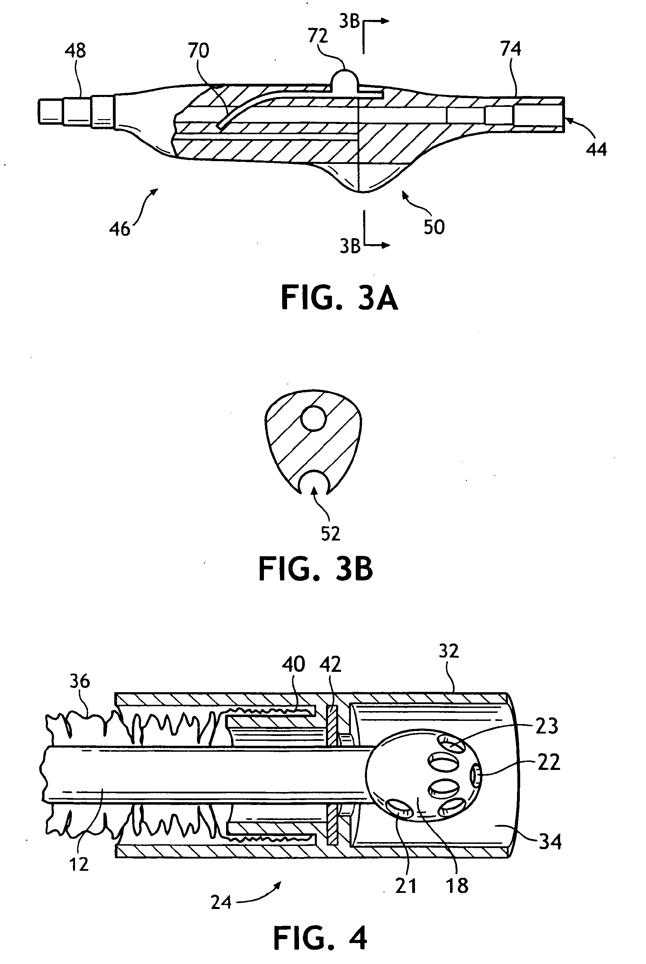

A flexible protective sleeve 36 is disposed around the suction tube 12 and has a proximal end 38 that is fixed relative to the proximal end 16 of the suction tube (Fig. 1A). The sleeve 36 has a distal end 40 (Fig. 4) that is configured with the collar 24 so as to move with the collar between the retracted position of Fig. 1C and the deployed position of Fig. 1A. Though the sleeve may be made of any suitable flexible material, it is contemplated that the sleeve may be translucent in order to visualize secretions and determine if the yankauer device or portions of the device should be discarded.

Referring to Fig. 4, a wiper seal 42 is disposed within the collar 24 and is retained within the collar by any suitable mechanism, such as the recess. This wiper seal is made from any suitable flexible material, i.e. an elastomeric material, and is in sliding frictional engagement around the suction tube 12. The wiper seal 42 scrapes along the suction tube 12 as the collar 24 is moved to its deployed position and scrapes any mucous or particulate matter on the suction tube 12 towards the suction tip 18. This matter can then be suctioned away through the tip 18. Frictional engagement between the wiper seal 42 and suction tube 12 may be sufficient to secure the collar at any position along the tube 12. In this manner, in the retracted position of the collar 24 and sleeve 36, an additional latch or other mechanism is not needed to secure the collar relative to the tube 12.

In a particular embodiment of the device 10 illustrated in Figs. 3A and 3B a handle member 46 is provided at the proximal end 16 of the suction tube 12. The handle member includes a distal end 62, a proximal end 64, an underside 66, and a topside 68. The handle member 46 may encompass the tube 12, or include an internal bore 44 that mates with the suction tube 12, as illustrated in Fig. 3A. The bore 44 is connectable to any convenient suction source for supplying suction through the suction tube 12.

It should be understood that the handle member 46 may include any manner of functional features, such as a valve or other device to regulate suction flow through the device 10. It is contemplated that many types of valves would be suitable for use with the present invention including, but not limited to, gate, dome, and slider valves. A description of gate and dome valves is included in U.S. Pat No's. 6,129,547 and 6,632,097. A slider valve 70 is illustrated in Figure 3. The slider valve is attached to a slider switch 72 (on/off switch). With proximal or distal movement of the slider switch, the valve may be opened or closed allowing secretions to be suctioned through the bore 44 into a suctioning source.

Returning to Figs. 3A and 3B, the handle member 46 includes any suitable adapter 48 for connecting the device 10 to the suction source or to any other intermediary member. The adapter 48 may be configured as a universal adapter for insertion into a wide diameter range of external suction tubing. In an alternative embodiment, the adapter 48 may comprise any type of quick release mechanism that mates the apparatus 10 to a suction source or other member. The adapter 48 may include any manner of internal structure to minimize leakage through the connection. For example, the adapter 48 may include an annular flange portion that surrounds an internal connection point so that any leakage from the connection is contained within the annular flange portion.

It is contemplated that the handle member will desirably have a smooth surface. A smooth surface allows secretions to be easily cleaned off the handle member. It also helps prevent the colonization of bacteria within crevices on the handle member surface. Because the handle member, desirably, has a smooth surface, it is contemplated that crevices on the handle member body are not needed to secure a firm grip of the handle member. Rather, as discussed below, the storage attachment mechanism allows for a firm and steady grip of the handle member.

Referring to Figs. 1A through 1C and 3B, the handle member 46 also includes a storage attachment mechanism 50 that is used to store the device 10 between uses. The storage attachment mechanism 50 includes a storage tube clip 52 sized so as to permit the handle member 46 to be attached to any manner of tubing.

The storage attachment mechanism is desirably located on the distal portion of the handle member 46, but may be located on any portion of the handle member, and it is desirably sized so that when the underside of the handle member is facing down, its distal tip is not contaminated on the surface on which the underside rests.

It is also contemplated that the storage attachment mechanism may have a substantially "C" shape so that it may be attached to the suction tubing or clamped onto various areas of the patient's room such as an IV pole, or a ventilator. This allows the handle member to be stored easily.

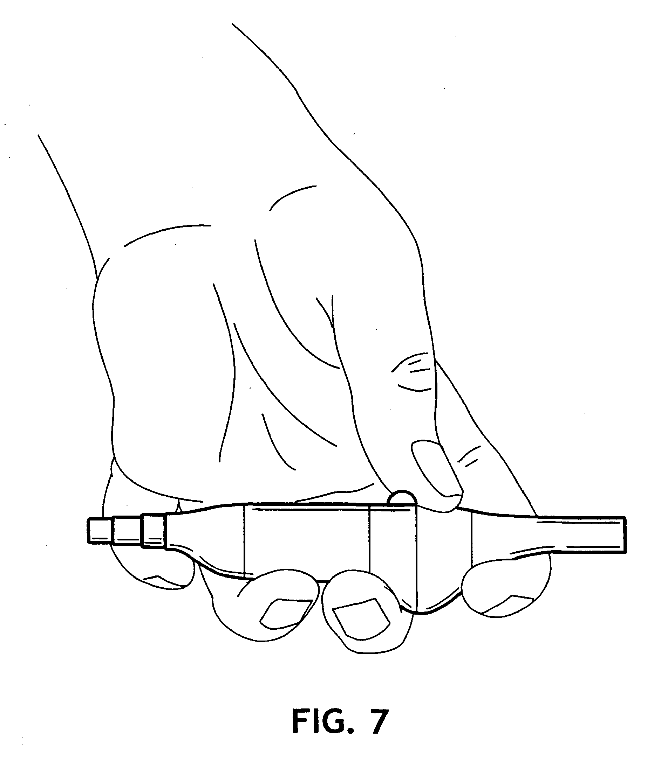

It is further contemplated, as illustrated in Fig. 7, that the storage attachment mechanism will act as a "trigger" in which the nurse may hold onto the handle more securely. In this regard, during proper use, the index finger and thumb will be located in substantially overlaying positions on the distal end of the handle member and remaining fingers will be located in a position proximal to the position of the storage tube clip. This position allows the nurse to proximally displace the slide switch without displacement of the other fingers. This ergonomic position prevents premature hand tiring, promotes a secure grip of the device, and facilitates easy on/off operation of the slider valve.

Referring to Figs. 1C and 1D, in the retracted position of the collar 24, the sleeve 36 may be stored in a recess 55 within the proximal end of the collar 24 so as not to interfere with use of the device when the collar 24 is in the retracted position of Fig. 1C. This storage feature also ensures that the sleeve 36 is maintained in a clean environment during use of the device 10 and that tearing is prevented when the sleeve is in the retracted position because the sleeve is not exposed to the outside environment.

In a particular embodiment, it may be desirable to include an external fitting 60 disposed around the proximal end of the suction tube 12. The external fitting may have a diameter greater than the diameter of both the proximal end of the suction tube 12 and the distal tip 74 of the handle member 46. This allows the distal tip 74 of the handle member 46, which is larger than the proximal end of the suction tube 12, to maintain a snug connection to the suction tube (which rests within the distal tip 74) and which itself nests within the external fitting. Thus, the external fitting is adapted to give added structural support to the distal end of handle member and minimize the possibility of leakage when secretions are transferred through the suction tube into the bore 44 of the handle member 46 for transportation into a suction source.

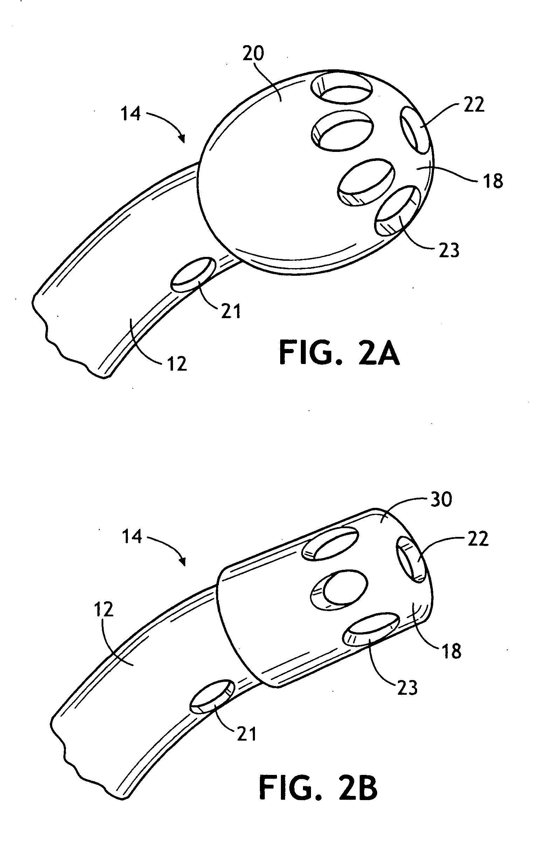

Referring to Figs. 2A and 2B, different embodiments of the suction tip 18 are illustrated. In the arrangement of Fig. 2A which is not in accordance with the invention, the suction tip 18 includes a bulbous end 20 with a central suction orifice 22 and a plurality of side orifices 23. This configuration may be desired in that the bulbous end 20 presents a rounded non-irritating surface and minimizes any discomfort to the patient. Any configuration of proximally disposed orifices 21 may also be provided to provide a more complete suctioning, as well as to aid in cleaning of the tip 18. In the embodiment of Fig. 2B which is in accordance with the invention, the suction tip 18 includes a generally cylindrical body 30 having a central suction orifice 22 and side orifices 23. The cylindrical body 30 may have a diameter that corresponds generally to the diameter of the suction tube 12. This particular embodiment may be desired wherein the device 10 must be used to clean more remote areas that are not accessible by a larger suction tip 18.

The suction tube 12 with the bulbous suction tip 18 is illustrated in Fig. 4. It should be appreciated that, in this particular configuration, the relatively large diameter of the bulbous suction tip 18 prevents the suction tip 12 from being pulled completely through the wiper seal 42 without undue force. Thus, the deployed position of the collar 24 is defined at the location where the wiper seal 42 abuts against the bulbous end 20 of the suction tip 18. In embodiments in accordance with the invention wherein the suction tip 18 includes a generally cylindrical body 30 matching the diameter of the suction tube 12, the length of the sleeve 36 is closely controlled so that the extension length of the sleeve defines the deployed position of the collar 24 at a location so that the suction tip 18 of the suction tube 12 is not pulled completely through the wiper seal 42 and into the protective sleeve.

It should also be appreciated that internal wall or flange structure may be provided within the collar 24 on either sides of the wiper seal 42 to prevent the suction tip 18 from being pulled completely through the collar 24.

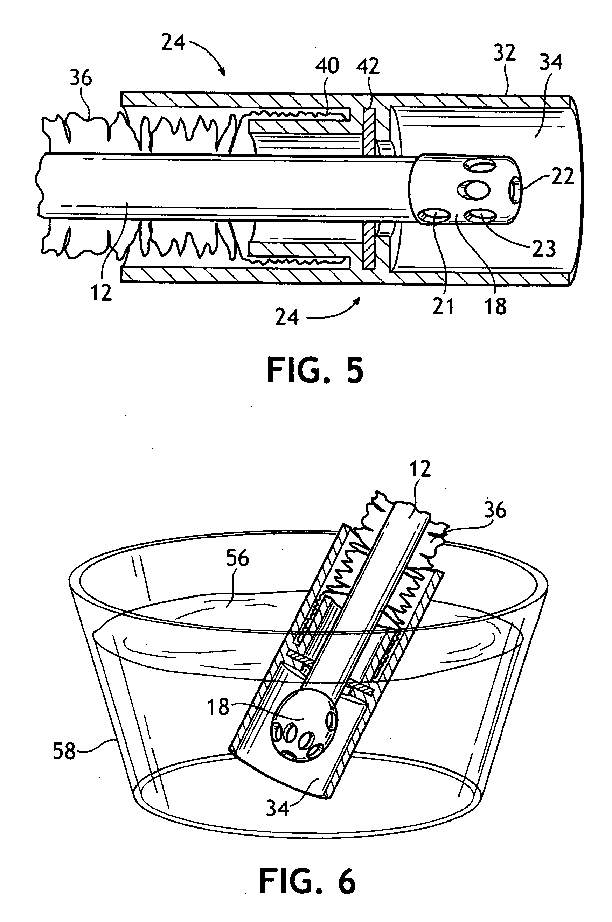

Referring to Fig. 4, in a particular arrangement of the suction device 10, the collar 24 includes an elongated open-ended annular ring portion 32 at the distal end thereof. This annular ring portion defines a chamber 34 in which the suction tip 18 resides in the deployed position of the collar 24, as illustrated in Fig. 4. The chamber 34, along with the wiper seal 42 defines a cleaning chamber within which the suction tip is contained. Referring to Fig. 6 in particular, a cleaning operation is depicted wherein the distal end of the device 10 with the collar in the deployed position is inverted into a container 58 of cleaning solution 56. The cleaning solution circulates around the suction tip 18 within the chamber 34. To create a more turbulent cleaning action, suction may be applied through the tip 18 while the device is in the cleaning solution. This turbulent cleaning action should suffice to remove any remaining mucous or particulate matter that has been scraped to the suction tip 18 by the action of the wiper seal 42. The proximally oriented suction orifices 21 ensure that any matter that may accumulate at the proximal side of the tip is also removed in the cleaning process.

It should be appreciated that the individual components of the suction device may be made from any suitable combination of materials. For example, the suction tube may be made of any clear medical grade polymer that permits the clinician to view the secretions sucked from the patient. The collar may be made of a polymeric material, for example, a polypropylene material. The protective sleeve 36 may be made from polyethylene or polypropylene. The wiper seal 42 may be made of any suitable flexible material, for example, medical grade silicone. Additionally, the wiper seal may be coated with a lubricant, for example a silicone lubricant. The silicone lubricant allows for smooth movement of the wiper seal over the shaft of the Yankauer tube. The silicone lubricant demonstrates a further benefit by assisting with the removal of secretion on the tube. In this regard, secretions have a lower likelihood of adhering or sticking to a lubricated tube versus a non-lubricated tube.

Additionally, it should be appreciated that the wiper seal, sleeve, and/or suction tube may be coated with an antimicrobial coating to aid in further reducing microbial load, and infection or recolonization on the suction tube. Suitable antimicrobial materials include, but are not limited to, triclosan, chlorohexidine, charged Silver, Polyhexamethylene Biguanide, Chitosan glycolate, Octadecylaminodimethyl Trimethoxysilylpropyl Ammonium Chloride, N-Alkyl Polyglycoside, PG-Hydroxyethylcellulose Cocodimonium Chloride (Quaternary Ammonium CellulosicSalt), Xylitol, 2-hydroxy-1,2,3-propanetricarboxylic acid, Benzenecarboxylic acid, 2-hydroxybenzoic acid, Methane-carboxylic acid, 1,3-Propanedicarboxylic Acid, Iodine, Ethyl Hydroxyethyl cellulose, or Polyvinyl pyrrolidone.

It should be readily appreciated by those skilled in the art that modifications and variations can be made to the embodiments of the invention described herein. It is intended that the invention include such modifications as come within the scope of the invention as set forth in the appended claims.

## Claims

1. A yankauer suction device (10), comprising:
an elongated suction tube (12) having a distal (14) and proximal end (16), a suction tip (18) being located at the distal end and the proximal end being connectable to a handle member;
a collar (24) slidable along said suction tube from a retracted position to a deployed position;
a sleeve (36) having a proximal end fixed relative to said proximal end of said suction tube, and a distal end configured with said collar so as to move with the collar and cover said suction tube (12) in said deployed position of said collar;
a wiper seal (42) contained within collar in sliding frictional engagement around said suction tube; and
a handle member (46), having a distal end (62), proximal end (64), distal tip (74), topside portion (68), and underside portion (66), the handle member being connectable to the suction tube at the proximal end of the suction tube, the handle member comprising an adapter (48) at its proximal end, the adapter configured for connecting the suction tube to a suction source, **characterized in that** the handle member further comprises a storage tube clip (52) located on the underside of the handle member,
wherein the suction tip (12) comprises a diameter generally corresponding to that of said suction tube, said deployed position of said collar (24) defined by the length of said sleeve so that said suction tip is not pulled through said wiper seal; and
wherein then device further comprises an open-ended cleaning chamber (34) defined at the distal end of the collar, the suction tip residing within the cleaning chamber in the deployed position of the collar.

2. The yankauer suction device of claim 1, further comprising:
an external fitting (60) defining the proximal end of the suction tube, the external fitting having a diameter greater than the proximal portion of the suction tube, the external fitting further being adapted to receive the handle member.

3. The yankauer suction device of claim 2, wherein the distal tip (74) of the handle member has a diameter greater than the proximal end of the suction tube and a diameter smaller than the diameter of the external fitting (60), wherein the distal tip of the handle member is adapted to nest within the external fitting.

4. The yankauer suction device of claim 1, wherein the storage tube clip (52) is located on the distal end of the handle member and/or wherein said sleeve is contained within a storage recess in said collar in said retracted position of said collar.

5. The yankauer suction device of claim 1, wherein said collar (24) comprises an elongated open-ended annular ring portion (32) at a distal end thereof, said suction tip residing within said ring portion in said deployed position of said collar.

6. The yankauer suction device of claim 1, wherein said wiper seal (42) further comprises a silicone lubricant on its surface and/or wherein said wiper seal further comprises an antimicrobial coating on its surface.

7. The yankauer suction device as in claim 1, wherein the cleaning chamber is delimited by the wiper seal (42).

8. The yankauer suction device of claim 1, wherein the handle member (46) further comprises at least one valve, preferably wherein the at least one valve is a slider valve.

9. The yankauer suction device of claim 8, wherein the handle member further comprises a slide switch (72) which is adapted to open and close the slider valve.

## Patentansprüche

1. Yankauer-Saugvorrichtung (10), welche umfasst:
einen länglichen Saugtubus (12) mit einem distalen (14) und einem proximalen Ende (16), wobei eine Saugspitze (18) an dem distalen Ende angeordnet ist und wobei das proximale Ende mit einem Griffelement verbindbar ist;
eine Manschette (24), die entlang des Saugtubus verschiebbar ist von einer zurückgezogenen Position zu einer eingesetzten Position;
eine Hülle (36), welche ein proximales Ende, welches relativ zu dem proximalen Ende des Saugtubus befestigt ist, und ein distales Ende aufweist, welches mit der Manschette eingerichtet ist, sich mit der Manschette zu bewegen und den Saugtubus (12) in der eingesetzten Position der Manschette abzudecken;
einen Abstreifer (42), der in der Manschette in verschiebbarer reibungsschlüssiger Verbindung um den Saugtubus enthalten ist; und
ein Griffelement (46), welches ein distales Ende (62), ein proximales Ende (64), eine distale Spitze (74), einen Oberseitenteil (68) und einen Unterseitenteil (66) aufweist, wobei das Griffelement mit dem Saugtubus an dem proximalen Ende des Saugtubus verbindbar ist, wobei das Griffelement einen Adapter (48) an dessen proximalen Ende umfasst, wobei der Adapter zum Verbinden des Saugtubus mit einer Saugquelle eingerichtet ist, **dadurch gekennzeichnet, dass** das Griffelement des Weiteren einen Lagertubusclip umfasst, der auf der Unterseite des Griffelements angeordnet ist,
wobei die Saugspitze (12) einen Durchmesser umfasst, der im Allgemeinen dem des Saugtubus entspricht, wobei die eingesetzte Position der Manschette (24) durch die Länge der Hülle definiert ist, so dass die Sauspitze nicht durch den Abstreifer gezogen wird; und
wobei die Vorrichtung des Weiteren eine Reinigungskammer (34) mit offenen Ende umfasst, die an dem distalen Ende der Manschette definiert ist, wobei sich die Saugspitze in der eingesetzten Position der Manschette in der Reinigungskammer befindet.

2. Yankauer-Saugvorrichtung gemäß Anspruch 1, welche des Weiteren umfasst:
eine äußere Passung (60), welche das proximale Ende des Saugtubus definiert, wobei die äußere Passung einen Durchmesser aufweist, der größer ist als der proximale Teil des Saugtubus, wobei die äußere Passung des Weiteren geeignet ist, das Griffelement aufzunehmen.

3. Yankauer-Saugvorrichtung gemäß Anspruch 2, wobei die distale Spitze (74) des Griffelements einen Durchmesser aufweist, der größer ist als das proximale Ende des Saugtubus, und einen Durchmesser aufweist, der kleiner ist als der Durchmesser der äußeren Passung (60), wobei die distale Spitze des Griffelements geeignet ist, sich in der äußeren Passung zu befinden.

4. Yankauer-Saugvorrichtung gemäß Anspruch 1, wobei der Lagertubusclip (52) auf dem distalen Ende des Griffelements angeordnet ist und/oder wobei sich die Hülle in der zurückgezogenen Position der Manschette in einer Lageraussparung in der Manschette befindet.

5. Yankauer-Saugvorrichtung gemäß Anspruch 1, wobei die Manschette (24) an deren distalen Ende einen länglichen ringförmigen Ringteil (32) mit einem offenen Ende umfasst, wobei sich die Saugspitze in der eingesetzten Position der Manschette in dem Ringteil befindet.

6. Yankauer-Saugvorrichtung gemäß Anspruch 1, wobei der Abstreifer (42) des Weiteren ein Silikongleitmittel auf dessen Oberfläche aufweist und/oder wobei der Abstreifer des Weiteren eine antimikrobielle Beschichtung auf dessen Oberfläche aufweist.

7. Yankauer-Saugvorrichtung gemäß Anspruch 1, wobei die Reinigungskammer durch den Abstreifer (42) begrenzt ist.

8. Yankauer-Saugvorrichtung gemäß Anspruch 1, wobei das Griffelement (46) des Weiteren mindestens ein Ventil umfasst, wobei das mindestens eine Ventil ein Schieberventil ist.

9. Yankauer-Saugvorrichtung gemäß Anspruch 8, wobei das Griffelement des Weiteren mindestens einen Schiebeschalter (72) umfasst, welcher geeignet ist, das Schieberventil zu öffnen und zu schließen.

## Revendications

1. Dispositif d'aspiration de Yankauer (10), comprenant :
un tube d'aspiration allongé (12) ayant une extrémité distale (14) et une extrémité proximale (16), un embout d'aspiration (18) étant situé à l'extrémité distale et l'extrémité proximale pouvant être reliée à un organe de poignée ;
un collier (24) pouvant coulisser le long dudit tube d'aspiration d'une position rétractée à une position déployée ;
un manchon (36) ayant une extrémité proximale fixe par rapport à ladite extrémité proximale dudit tube d'aspiration, et une extrémité distale configurée avec ledit collier de manière à se déplacer avec le collier et recouvrir ledit tube d'aspiration (12) dans ladite position déployée dudit collier ;
un joint racleur (42) contenu à l'intérieur du collier en contact de frottement à glissement autour dudit tube d'aspiration ; et
un organe de poignée (46), ayant une extrémité distale (62), une extrémité proximale (64), un embout distal (74), une partie de face supérieure (68) et une partie de face inférieure (66), l'organe de poignée pouvant être relié au tube d'aspiration à l'extrémité proximale du tube d'aspiration, l'organe de poignée comprenant un adaptateur (48) à son extrémité proximale, l'adaptateur étant configuré pour relier le tube d'aspiration à une source d'aspiration, **caractérisé en ce que** l'organe de poignée comprend en outre une attache de tube de stockage (52) située sur la face inférieure de l'organe de poignée,
dans lequel l'embout d'aspiration (12) comprend un diamètre correspondant généralement à celui dudit tube d'aspiration, ladite position déployée dudit collier (24) étant définie par la longueur dudit manchon de telle sorte que ledit embout d'aspiration n'est pas tiré à travers ledit joint racleur ; et
dans lequel le dispositif comprend en outre une chambre de nettoyage à extrémité ouverte (34) définie à l'extrémité distale du collier, l'embout d'aspiration résidant à l'intérieur de la chambre de nettoyage dans la position déployée du collier.

2. Dispositif d'aspiration de Yankauer selon la revendication 1, comprenant en outre :
un raccord externe (60) définissant l'extrémité proximale du tube d'aspiration, le raccord externe ayant un diamètre supérieur à la partie proximale du tube d'aspiration, le raccord externe étant en outre adapté pour recevoir l'organe de poignée.

3. Dispositif d'aspiration de Yankauer selon la revendication 2, dans lequel l'embout distal (74) de l'organe de poignée a un diamètre supérieur à l'extrémité proximale du tube d'aspiration et un diamètre inférieur au diamètre du raccord externe (60), dans lequel l'embout distal de l'organe de poignée est adapté pour s'emboîter à l'intérieur du raccord externe.

4. Dispositif d'aspiration de Yankauer selon la revendication 1, dans lequel l'attache de tube de stockage (52) est située sur l'extrémité distale de l'organe de poignée et/ou dans lequel ledit manchon est contenu à l'intérieur d'un évidement de stockage dans ledit collier dans ladite position rétractée dudit collier.

5. Dispositif d'aspiration de Yankauer selon la revendication 1, dans lequel ledit collier (24) comprend une partie de bague annulaire allongée à extrémité ouverte (32) à une extrémité distale de celui-ci, ledit embout d'aspiration résidant à l'intérieur de ladite partie de bague dans ladite position déployée dudit collier.

6. Dispositif d'aspiration de Yankauer selon la revendication 1, dans lequel ledit joint racleur (42) comprend en outre un lubrifiant au silicone sur sa surface et/ou dans lequel ledit joint racleur comprend en outre un revêtement antimicrobien sur sa surface.

7. Dispositif d'aspiration de Yankauer selon la revendication 1, dans lequel la chambre de nettoyage est délimitée par le joint racleur (42).

8. Dispositif d'aspiration de Yankauer selon la revendication 1, dans lequel l'organe de poignée (46) comprend en outre au moins une soupape, de préférence dans lequel la au moins une soupape est une soupape à tiroir.

9. Dispositif d'aspiration de Yankauer selon la revendication 8, dans lequel l'organe de poignée comprend en outre un interrupteur à glissière (72) qui est adapté pour ouvrir et fermer la soupape à tiroir.
